# EUROPEAN PATENT APPLICATION

(11) **EP 4 726 591 A1**
(43) Date of publication of application: **15.04.2026**
(21) Application number: 25207357.2
(22) Date of filing: 07.10.2025
(51) Int. Cl.: G06F 21/62, H04L 12/18, H04L 9/40, G06F 21/32, G10L 15/26, H04L 65/403

(54) **METHOD AND SYSTEM FOR CONFERENCE PRIVACY SCREENING ON EDGE WITH SENSITIVE AWARE SOLUTION**

(30) Priority: 08.10.2024 US 202418909842
(71) Applicant: Mitel Networks Corporation, Ottawa, Ontario K2K 3K1 (CA)
(72) Inventor: Czekailo, Glaucio Porcides, Brasov (RO); Brochonski, Michael, 80730-000 Curitiba (BR); Augustin, Paul, Brasov (RO)
(74) Representative: Schaafhausen, Anne

(57) **Abstract**

The present invention relates to a method for Conference Privacy Screening on Edge with Sensitive Aware Solution and a system for Conference Privacy Screening on Edge with Sensitive Aware Solution wherein the method comprises joining via a client or client node, a conference session held on a collaboration tool's backend of a server node by one or more users and capturing the audio stream of the conference session, by the client node and/or the server node. Then an Automatic Speech Recognition, ASR, model transcribes the audio stream of the conference session and sending the transcript to a transformer model. The transformer model evaluates if a sensitive topic occurs in the transcript and marks it with a flag in case a sensitive topic occurs. A Privacy Escalation Control Process analyzes then the flagged sensitive topic and confirms or not the flagged sensitive topic.

## Description

### Field of the Invention

The present disclosure generally relates to electronic communication systems and methods.

### Background of the Invention

During an electronic communication, it may be desirable to determine when a discussion of a sensitive topic begins and to automatically change security and/or communication channels of the electronic communication. Accordingly, improved methods and systems that address these challenges may be desirable.

Any discussion, including discussion of problems and solutions, set forth in this section has been included in this disclosure solely for the purpose of providing a context for the present disclosure, and should not be taken as an admission that any or all of the discussion was known at the time the invention was made or otherwise constitutes prior art.

### Brief Description of the Drawing Figures

A more complete understanding of exemplary embodiments of the present disclosure can be derived by referring to the detailed description and claims when considered in connection with the following illustrative figures.
Fig. 1 shows a schematic illustration of a dynamic sensitive topic screening protection process and system according to an embodiment of the invention.
Fig. 2 shows a schematic illustration of a system and flow chart for a conference privacy escalation according to another embodiment of the invention.

It will be appreciated that elements in the figures are illustrated for simplicity and clarity and have not necessarily been drawn to scale. For example, the dimensions of some of the elements in the figures may be exaggerated relative to other elements to help improve understanding of illustrated embodiments of the present disclosure.

### Detailed Description of Exemplary Embodiments

Although certain embodiments and examples are disclosed below, it will be understood by those in the art that the invention extends beyond the specifically disclosed embodiments and/or uses of the invention and obvious modifications and equivalents thereof. Thus, it is intended that the scope of the invention disclosed should not be limited by the particular disclosed embodiments described below.

The present invention relates to a method for Conference Privacy Screening on Edge with Sensitive Aware Solution and a system for Conference Privacy Screening on Edge with Sensitive Aware Solution wherein the method comprises joining via a client or client node, a conference session held on a collaboration tool's backend of a server node by one or more users and capturing the audio stream of the conference session, by the client node and/or the server node. Then an Automatic Speech Recognition, ASR, model transcribes the audio stream of the conference session and sends the transcript to a transformer model. The transformer model evaluates if a sensitive topic occurs in the transcript and marks it with a flag in case a sensitive topic occurs. A Privacy Escalation Control Process then analyzes the flagged sensitive topic and confirms or denies the flagged sensitive topic.

While the primary focus is on standard web collaboration tool conference rooms, implementing such measures can significantly enhance security resilience across various contexts. Such an implementation addresses several key problems, such as detecting sensitive topics in real-time and initiating appropriate security protocols seamlessly or ensuring consistent use of secure channels and identity verification, minimizing reliance on user discretion. Furthermore, by mitigating impersonation attacks, particularly those involving advanced deep fake techniques or authenticating and verifying the identities of third-party users joining a conference from outside the organization, such an implementation can help to avoid human error/mishaps by not following compliant company policies for discussing sensitive topics in a collaboration tool environment.

To solve these problems, such a solution should develop an integrated solution to identify sensitive topics during virtual conferences, should automatically trigger identity verification processes and create secure channels when needed, should implement user-friendly security features that encourage consistent adoption and should establish a secure edge (on-premises) solution that minimizes reliance on external entities and ensures maximum data protection.

By focusing on these key aspects and prioritizing an edge-based architecture, the system then can significantly enhance the security of virtual collaborations in a wide range of sensitive contexts, while also mitigating the chance of human errors with security aspects. This localized approach to security provides the highest level of protection and control for users, proactively mitigating risks and ensuring the privacy and integrity of critical communications.

Previous solutions in the state of the art for ensuring security in sensitive topics in online meetings focus on guaranteeing security before the meeting starts and then a secure environment while the meeting is running. High-stakes contexts such as defense or high-level government consultations and conferences are very mature on this topic, currently making usage of the following technologies.

End-to-End Encryption (E2EE) ensures that data are encrypted on the sender's device and only decrypted on the recipient's device. No intermediaries, including the service providers, can access the encrypted data. Popular collaboration platforms such as Zoom and Microsoft Teams offer E2EE implementation for their meetings to protect the confidentiality of communications.

Multi-Factor Authentication (MFA) requires users to provide two or more verification factors to gain access to the online meeting, enhancing security beyond just a password. Common verification factors can comprise something you know (password), something you have (security token), and something you are (biometric verification).

Secure Meeting Invitations, in practice this means distributing meeting links and credentials through secure channels and using meeting-specific passwords to prevent unauthorized access.

Virtual Private Network (VPN) is used to encrypt Internet traffic between the user's device and the VPN server, adding a layer of security, especially when participants are in various locations or using public networks.

Network Security Measures (such measure can be e.g., firewalls and Intrusion Detection Systems) are used to monitor and protect against unauthorized access and potential attacks on the network hosting the online meeting.

Secure Hardware and Software, this means Trusted Devices and/or Certified Software. Trusted devices mean ensuring that participants use secure, trusted devices with up-to-date security patches and antivirus software. Using certified software means software that has been rigorously tested and certified for security, often by governmental or international standards bodies.

Access Controls like Role-Based Access Control (RBAC), regulate the access based on the user's role within the organization to ensure that only authorized individuals can join or control a meeting.

Participant management is the ability to lock meetings, remove participants, and control who can share screens or files during the meeting.

Data Loss Prevention (DLP) means the implementation of solutions to monitor and protect sensitive data from being shared or leaked during online meetings.

Regular Audits and Penetration Testing. With regular audits the security infrastructure is improved by identifying and fixing vulnerabilities. Penetration Testing means conducting simulated cyber-attacks to test and improve the security of the online meeting platforms.

Legal and policy measures comprise compliance (adhering to international and local laws and regulations regarding data protection and privacy (e.g., GDPR, HIPAA)) and policy (developing and enforcing strict security policies and protocols for online meetings).

However, the state of the art does not cover a mechanism to enhance the security of spoken content in conferences in a collaboration tool.

Therefore, examples of the present invention are designed to provide a method and a corresponding system for Conference Privacy Screening on Edge with Sensitive Aware Solution. In particular, a method and a system are designed to ensure that sensitive or confidential information discussed in regular meetings respects predefined security policies.

This object is solved by a method and a system having the features described below. Preferred embodiments of the invention are presented below.

According to examples of the disclosure, a method for Conference Privacy Screening on Edge with Sensitive Aware Solution is provided, the method comprising the steps of:
- joining via a client or client node, a conference session held on a collaboration tool's backend of a server node, by one or more users;
- capturing, by the client node and/or the server node, the audio stream of the conference session;
- transcribing, by an Automatic Speech Recognition, ASR, model the audio stream of the conference session and sending the transcript to a transformer model;
- evaluating, by the transformer model, if a sensitive topic occurs in the transcript;
- marking, by the transformer model, in a case in which a sensitive topic occurs, the sensitive topic with a flag
- analyzing, by a Privacy Escalation Control Process, the flagged sensitive topic, wherein if the Privacy Escalation Control Process cannot confirm the flagged sensitive topic, the flag is removed and the Privacy Escalation Control Process for that sensitive topic is closed.

Both the ASR model and transformer model and/or the Privacy Escalation Control Process work in tandem, with the ASR model containing an intermediate projector layer that ensures the audio input can be transformed and input into the transformer model with low latency. This technique also ensures that potential transcriptions from audio to text by the ASR model may be more easily corrected and interpreted by the transformer model. The transformer model can be continually refined on input data, expanded, and improved, tailored to the specific user and/or according to a company or authority policy. Examples of sensitive topics comprise discussing confidential financial information, sharing personal data or private health information of individuals, talking about trade secrets, proprietary algorithms, or sensitive intellectual property and/or mentioning classified or Non-Disclosure Agreement (NDA) information.

According to a preferred embodiment, in case the Privacy Escalation Control Process confirms the occurrence of a sensitive topic, the method further comprises, triggering, by the Privacy Escalation Control Process a re-authentication request to the one or more user, wherein the one or more users are forced to identify themselves again in order to participate in the conference session again. For authentication of in-tenant or internal users, the usual authentication methods may be required, or an additional factor of authentication, such as 2FA (2-Factor Authentication) or biometric authentication methods may be necessary. This should be aligned with corporate or tenant policies. For external parties, a more robust authentication method to confirm identity may be requested, such as passkeys that contain a biometric registry and a more robust factor to verify the user's identity; it may also be tied to a government institution. If the user is already registered, they can reauthenticate with a biometric sensor (such as a fingerprint or facial recognition), PIN, or pattern, freeing them from having to remember and manage passwords. As the Passkey platform already confirms the identity of the person, this can be used to give an extra layer of assurance that the external party is not an impersonator. For both re-authentication cases, this ensures that people have not entered the conference or call without permission and reduces the risk of impersonation and deep fake attacks.

According to another preferred embodiment, the method further comprises transmitting, by the Privacy Escalation Control Process, to the clients or clients' nodes or to an organizer or a moderator of the conference session, information about the occurrence of the sensitive topic. The privacy escalation control process can first notify the collaboration tool's backend and/or the individual clients and thus the users or participants of the conference that a potentially sensitive topic has been found. However, it is also possible that such information is only communicated to specific user nodes of the conference. This is an alternative approach to not notify every edge about the sensitive topic, but only a moderator of the conference (e.g., the host, organizer, manager, team leader). In this case, the moderator receives the information about the sensitivity of the topics discussed, helping him to guide the conversation to a different topic, alert the other users, or take the responsibility about what is being said. This moderator-based approach enhances the user experience, encouraging adoption, since from the general attendees' point of view it is just a simple conference. For this scenario it is assumed the moderator of the conversation/conference is authenticated with required methods by company or tenant policy, otherwise this variation is not possible.

According to still another preferred embodiment, the ARS model and/or the transformer model and/or the Privacy Escalation Control Process is implemented at the one or more client or client node and/or at the server node or the collaboration tool's backend.

Further, according to a preferred embodiment, the step of transcribing the method further comprises using modality tokens as predefined identifiers on keywords, terms or user role, wherein the transcript is marked in real-time if such a modality token is found. The ASR model can be continually refined, and additional grammar can be added by the collaboration tool's tenant owner for improved accuracy, minimizing the error rate. If the ASR model is local (private to each user) or on a server implemented, its grammar can be continually expanded and improved, e.g., tailored to the specific user or according to a company or authority policy. Modality tokens can be used to highlight if some words or terms might need special attention (in the sensitive topic aspect) in later stages of the process. However, modality tokens provide cues on terms or words potentially linked to security-sensitive topics but without context, they may not be sufficient by themselves.

According to yet another preferred embodiment, the re-authentication comprises two-factor-authentication, biometric authentication and/or passkey authentication comprising registered identity authentication.

According to yet another preferred embodiment, the Privacy Escalation Control Process confirms the flagged sensitive topic by performing a comprehensive analysis that comprises the aggregation of information and the continuous analysis of information in real time and/or performing a comprehensive analysis in parallel to the transcription of the audio stream by the ASR model and/or in parallel to the evaluation of the occurrence of a sensitive topic in the transcript by the transformer model.

According to yet another preferred embodiment, the Privacy Escalation Control Process is part of the transformer model, wherein the Privacy Escalation Control Process is executed in parallel to the evaluation and/or marking of sensitive topics by the transformer model.

According to yet another preferred embodiment, in case the Privacy Escalation Control Process confirms the occurrence of a sensitive topic, the method further comprises triggering by the Privacy Escalation Control Process an action function call comprising several (e.g., a plurality of, such as two or more or about two to twenty) instruction arguments. In case a potentially sensitive topic is mentioned that requires heightened security of the collaboration tool and measures to prevent potential leakage of information by users, the transformer model triggers the action function call.

According to yet another preferred embodiment, the instruction arguments comprise:
- requesting a re-authentication from the one or more users; and/or
- requesting a creation of one or more secure communication channels from a conference backend of the collaboration tool's backend; and/or
- obtaining access to or information about the actively used audio source of the one or more clients or client nodes comprising both input and output audio sources; and/or
- communicating to all the one or more clients or client nodes of the conference session the instruction arguments.

The instruction argument(s) to request re-authentication from one or more users is always mandatory. It may also be necessary or desired to add a further instruction argument using the action function call if, for example, an increased security profile is to be guaranteed for the communications channels. The heightened profile is configured by tenant profile needs, if the communication channels (which can include audio, text, and video) for that conference/call need an increased security profile. If this argument is active and the in-tenant profile makes it a policy, a new set of secure channels will be provided with stricter security policies (such as not being able to share files), higher level of encryption, and in some cases, different routing for the channels. Another instruction argument concerns the audio sink (output) name being evaluated by the Privacy Escalation Control Process or the transformer model. If there is a potential chance that the audio output is a loudspeaker and the topic is sensitive, depending on tenant policies, the user may be required to change his audio device output (e.g., to a headset or headphone) after re-authenticating to be able to rejoin the conference/call. Finally, if an action function is triggered in any of the participants' call/conference nodes (i.e., a potentially sensitive topic is identified on any device), the pertinent arguments of the functions are also communicated to all other members of the call/conference, triggering a re-authentication of all users and, in some cases, an evaluation of the audio sink (output) of the participants for loudspeakers.

According to yet another preferred embodiment, in a case in which the Privacy Escalation Control Process confirms the occurrence of a sensitive topic, the method further comprises sending, by the Privacy Escalation control Process a Uniform Resource Locator, URL, to the one or more users of the conference session for re-authentication and rejoining to the conference session. If any participants of the call/conference fail to re-authenticate or follow any of the demanded procedures for the first time (due to a timeout or any other mishap), they will have the opportunity to try again as a URL for the conference will be made available for rejoining. Alternatively, this URL can also be sent to the participant's email, if available. In both cases, authentication and any additional measures required will be performed again. This is important because, in some cases, a user may not be able to use a system to re-authenticate. For example, if it is an external party using Passkey and the device has no biometric reading capabilities, the user will have to switch to a new device with biometric authentication capabilities to do so or if the user is not able to prove that he is not using a loudspeaker as a source, and this is a policy is demanded by the tenant to join a heightened security communication channel for that conference/call, he will have to switch peripherals or devices altogether.

According to the invention, a system for Conference Privacy Screening on Edge with Sensitive Aware Solution is provided, wherein the system is configured to perform the method according to any of the above-mentioned embodiments, wherein the system comprises:
- one or more clients or client nodes;
- a server node with a collaboration tool's backend;
- an automatic speech recognition, ASR, model; and
- a transformer model.

According to a preferred embodiment, the automatic speech recognition, ASR, model is configured to receive audio data input from audio output stream channel of the collaboration tool, and to transcribe audio into text in real-time by use of modality tokens as identifiers for keywords, terms and/or user role.

According to another preferred embodiment, the transformer model and/or the Privacy Escalation Control Process is pre- trained for flagging or confirming sensitive topics based on its modality, and/or is configured to use additional text and/or metadata input and/or is configured to gain access or information to the actively used audio source of the one or more clients or client nodes comprising both input and output audio sources. The additional text and metadata can come from various sources to be input as additional context into the transformer model. For example, it can be a series of guidelines provided by the company or department (e.g., Sensitive or NDA topics, flagged as internal only or not to be discussed openly), or metadata from the collaboration tool or conference session with the information about the users, who they are (for example derived from an org chart) and which organization they belong to (if the user is internal from a determined sector or department from the company). Further the text and/or metadata can be general (that is always applied to all users), or tenant based (e.g., imagine a big company with HR, R&D and Finance departments, each can have its own set of policies, rules or guidelines on what would be flagged as a potentially sensitive topic or context). It must also be noted that this text and/or metadata highly depends on the company, the vertical it is in and the sectors it makes contact to. The collaboration tool has access to the actively used audio source names from the device, including both input and output. This information can be retrieved from the collaboration tool via API and made available to the transformer model or the Privacy Escalation Control Process as text upon request.

The name of the output sink in many cases provides a clue if the device is in "loudspeaker mode." For mobile phones, it may be identified as "Phone Speaker" if using the device itself. In other use cases, such as using peripherals (either on a Personal Computer, Mobile Phone, Tablet, etc.) via Bluetooth or connected via USB (or similar connectors), the hardware device can be identified by name (and model) if it is a loudspeaker. Additionally, the transformer model may be trained or have Retrieval Augmented Generation (RAG) capabilities attached to it with commonly used devices that may act as or are loudspeakers (like physical conference microphone plus speaker devices). If a security sensitive topic is identified by evaluating context and modality token cues, the transformer model requests, by function call, the text information with the current active audio sink (output).

According to still another preferred embodiment, the transformer model and/or the Privacy Escalation Control Process is configured to use additional custom defined tenant rules and/or user specific sensitive topics. Here, the custom defined tenant rules in specific sensitive topics could be a guideline, instructions, a list that may come from the tenant owner or it could be general for the company itself. For example, company A can have a policy guide around sensitive topics and this guide can be used as input text; this would be applied additionally to any employee in the company. Additionally in company A, there might be different departments such as HR, R&D and Finance. For each department there could be also a set of rules, topics or a policy guide on what is considered sensitive. For example, for HR it might be personal information about users, for Finance it could be budget, payrolls, etc. And finally for the user specific sensitive topics there can be the option for the user itself or based on the user metadata to have user specific sensitive topics. Example: John is CTO of company A; he has a custom set of policies assigned to him which if flagged in a conversation as sensitive will enable the mechanism for a secure channel. This is specific to John in the topics he has as a CTO.

According to yet another aspect of the present invention, a program element is provided, which when being executed by a processor is adapted to carry out steps of the method for Conference Privacy Screening on Edge with Sensitive Aware Solution.

According to another aspect of the present invention, a computer-readable medium comprising program code is provided, which when being executed by a processor is adapted to carry out steps of the method for Conference Privacy Screening on Edge with Sensitive Aware Solution.

A computer-readable medium may be a floppy disk, a hard disk, an USB (Universal Serial Bus) storage device, a RAM (Random Access Memory), a ROM (Read Only Memory) or an EPROM (Erasable Programmable Read Only Memory). A computer readable medium may also be a data communication network, such as the Internet, which may allow downloading a program code.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the apparatus type claims and features relating to the method type claims are considered to be disclosed. In addition, features relating to one of the embodiments may be combined with other features of another embodiment, the drawings or the claims, where possible. The invention and embodiments thereof are described below in further detail in connection with the drawing(s).

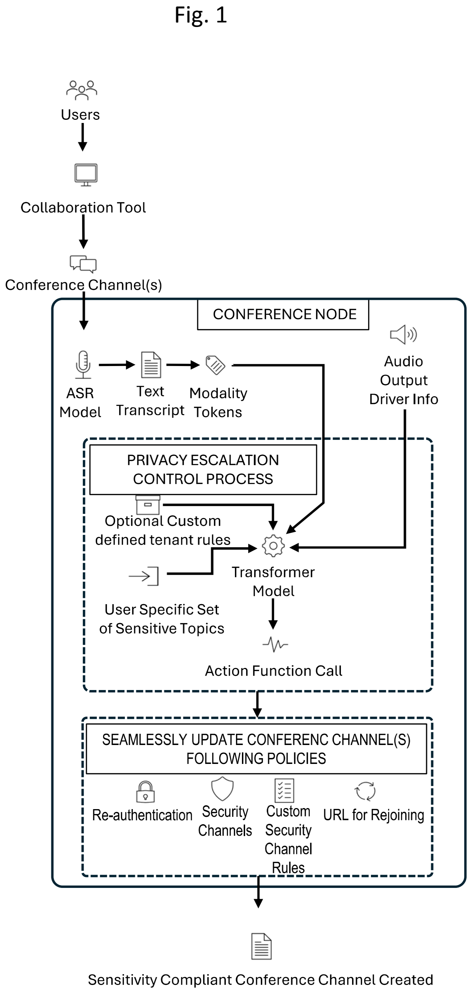

Fig. 1 schematically shows a dynamic sensitive topic screening protection process. In the following, a base use-case scenario is described according to one embodiment of the invention. The proposed solution introduces an additional security layer for calls and conferences in a collaboration tool, which can be executed safely on each participant's device at the edge (locally). Users join a call or conference e.g., provided by a collaboration tool and they might not need to confirm their identity initially (as it can include external users).

As users begin to speak about various topics, in this example, each conference node (for each participant) runs the following process however, according to the invention, it is also possible for a server that practically acts as a central node or master node on which the collaboration tool runs to execute these steps and the clients (conference nodes) only provide the required data and information and execute the instructions of the server. In a first step, the audio output stream channel of the collaboration tool is captured. This means the audio output data are revealed to the conference node. In the next step, an Automatic Speech Recognition (ASR) model with modality tokens receives the audio stream channel as input.

The ASR model can be continually refined locally and have additional grammar added by the collaboration tool's tenant owner for improved accuracy, minimizing the error rate. As the ASR model is local (private to each user) in this scenario, its grammar can be continually expanded and improved, tailored to the specific user. Modality tokens are added to be used as identifiers in upcoming stages of the process. The ASR model transcribes audio into text with modality tokens as identifiers on keywords or terms. This transcription of the conversation from audio to text by the ASR model can be done in real-time. Further, the modality tokens are used to highlight if some words or terms might need special attention (in the sensitive topic aspect) in later stages of the process. This stage of the process ensures that the audio input in the ASR model is transformed into a text transcript with modality tokens.

At the same time, information can also be gathered by the collaboration tool about audio output or input drivers or sources used or available for the conference node. This information and/or the transcribed audio data with modality tokens from the ASR model are then fed to a transformer model.

The transformer model is in most cases pre-trained for flagging security items based on their modality. This defined transformer model is specialized to receive the text transcript with modality tokens. Modality tokens provide cues on terms or words potentially linked to security-sensitive topics (but without context, they may not be sufficient by themselves). The transformer model can be continually refined on input data, expanded, and improved, tailored to the specific user. Both the ASR and transformer models work in tandem, with the ASR model containing an intermediate Projector Layer that ensures the audio input can be transformed and input into the transformer model with low latency. This technique also ensures that potential transcriptions from audio to text by the ASR model may be more easily corrected and interpreted by the transformer model.

The transformer model may also take additional text and metadata input, if available, for evaluating sensitive topics. As previously described, the collaboration tool has access to the actively used audio source names from the device, including both input and output. This information is fetched via API from the collaboration tool and made available to the transformer model as text upon request. The name of the output sink in many cases provides a clue if the device is in "loudspeaker mode." For mobile phones, it may be identified as "Phone Speaker" if using the device itself. In other use cases, such as using peripherals (either on a Personal Computer, Mobile Phone, Tablet, etc.) via Bluetooth or connected via USB (or similar connectors), the hardware device can be identified by name (and model) if it is a loudspeaker.

Additionally, the transformer model may be trained or have Retrieval Augmented Generation (RAG) capabilities attached to it with commonly used devices that may act as or are loudspeakers (such as physical conference microphone plus speaker devices).

The transformer model initially takes the text transcript in real-time during the conference (this text transcript also contains modality tokens for cues). Then the transformer model evaluates if a sensitive security topic is brought up. Examples of sensitive topics may comprise for example: discussing confidential financial information; sharing personal data or private health information of individuals; talking about trade secrets, proprietary algorithms, or sensitive intellectual property; mentioning classified or NDA information.

In case a potentially sensitive topic is mentioned that requires heightened security from the collaboration tool and measures to prevent potential information leaks by users, the following actions can be taken:
The transformer model triggers one action function call, which may contain a plurality of instruction arguments.

The first instruction argument is always mandatory and requires the re-authentication of all participants in the call/conference. For authentication of in-tenant or internal users, the usual authentication methods may be required, or an additional factor of authentication, such as 2FA (2-Factor Authentication) or biometric authentication methods may be necessary. This should be aligned with company or tenant policy. For external parties, a more robust authentication method to confirm identity may be requested, such as Passkeys, which contain biometric registry, a more robust way to verify the user's identity; it may also be tied to a government institution. If the user is already registered, they can reauthenticate with a biometric sensor (such as a fingerprint or facial recognition), PIN, or pattern, freeing them from having to remember and manage passwords. As the Passkey platform already confirms the identity of the person, this can be used to give an extra layer of assurance that the external party is not an impersonator. For both re-authentication cases, this ensures that people in the conference or call did not enter without permission, and the chances of impersonation and deep fake attacks are diminished.

The second instruction argument defines if the communication channels (which can include audio, text, and video) for that conference/call need a heightened profile. This is configured by the tenant profile needs. If this argument is active and the in-tenant profile makes it a policy, a new set of secure channels will be provided with stricter security policies (such as not being able to share files), higher levels of encryption, and in some cases, different routing for the channels.

The third instruction argument concerns the audio sink (output) name being evaluated by the transformer model. If there is a potential chance that the audio output is a loudspeaker and the topic is sensitive, depending on tenant policies, the user may be required to change their audio device output (e.g., to a headset or headphone) after re-authenticating to be able to rejoin the conference/call.

Finally, if a function is triggered in any of the participants' call/conference nodes (i.e., a potentially sensitive topic is identified on any device), the pertinent arguments of the functions are also communicated to all other members of the call/conference, triggering a re-authentication of all users and, in some cases, an evaluation of the audio sink (output) of the participants for loudspeakers.

If any participants of the call/conference fail to re-authenticate or follow any of the demanded procedures for the first time (due to a timeout or any other mishap), they will have the opportunity to try again as a URL for the conference will be made available for rejoining. Alternatively, this URL can also be sent to the participant's email, if available. In both cases, authentication and any additional measures required will be performed again. This is important because, in some cases, a user may not be able to use a system to re-authenticate, such as if it is an external party using Passkey and the device has no biometric reading capabilities. In such cases, the user will have to switch to a new device with biometric authentication capabilities to do so and/or if the user is not able to prove he/she is not using a loudspeaker as a source, and this is a policy demanded by the tenant to join a heightened security communication channel for that conference/call, the user will have to switch peripherals or devices altogether.

However, according to the invention, it is just as possible to change from the proposed edge-based architecture solution to a server-side solution. In cases where the conference media server has internal access to the unencrypted media streams, along with the ASR model, it would be responsible for sending the text transcript, modality tokens and any metadata that can be used by the Privacy Escalation Control Process that is running along with the conference backend. This shift not only reduces the computational burden on client devices, leading to improved performance and battery life - for mobile users, but also allows a wider device support and scalable performance across different client devices, as server-side resources can be more easily upgraded and maintained. This variation is not applicable to E2EE conferences, or conferences where the media streams are not anchored to the media server.

By implementing the proposed solution, the inventive system can automatically detect sensitive topics in real-time, trigger identity verification processes, create secure channels when needed, and ensure consistent adoption of user-friendly security features. The edge-based architecture minimizes reliance on external entities and provides the highest level of protection and control for users, proactively mitigating risks such as impersonation attacks and deep fakes while ensuring the privacy and integrity of critical communications.

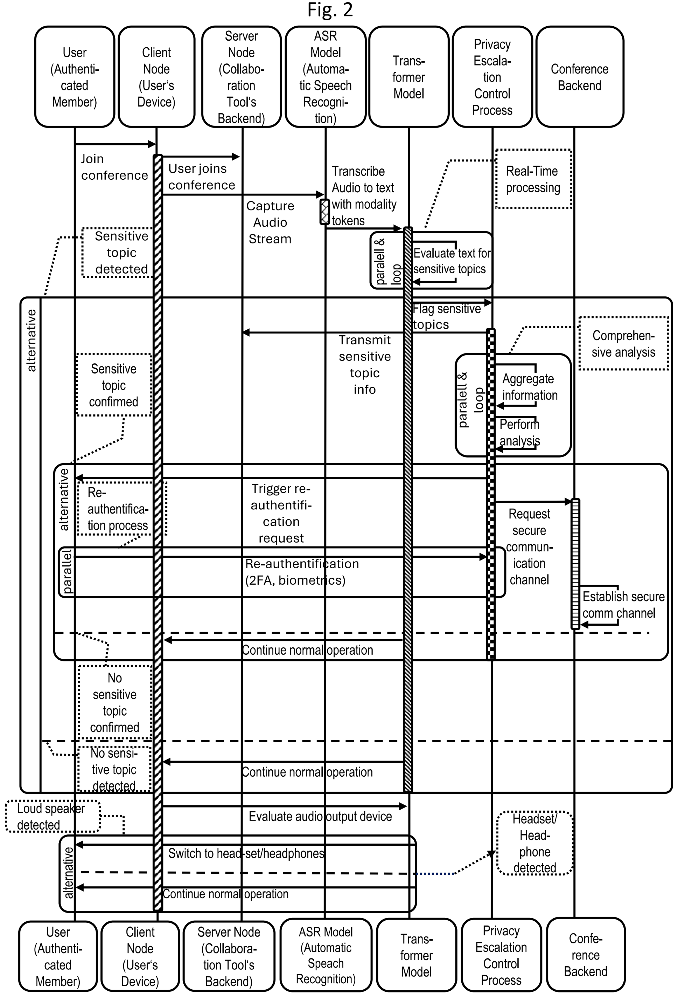

Fig. 2 shows system and a flowchart of the method for a conference privacy escalation scenario according to another embodiment of the invention. The individual sections of Fig. 2, such as "user", "client node", "server node", "ASR model", "transformer model", "privacy escalation control process" and "conference backend", are to be understood as entities that carry out various process steps; these entities can also simultaneously represent devices or be connected to such devices. Some entities can also be part of other entities; for example, the privacy escalation control process can be part of the transformer model. In FIG. 2, the entities have only been divided up in this way for a better understanding of the invention so that the entire flow process is easier to understand. Various sections and/or processes described herein, such as "client node," "server node," "ASR model," "transformer model," "privacy escalation control process" and "conference backend" can be implemented as one or more modules. The term module as used herein can refer to computer program instructions, encoded on computer storage medium for execution by, or to control the operation of, data processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., solid-state memory that forms part of a device, disks, or other storage devices).

In the beginning of this depicted scenario a user joins a conference. Depending on the policy rules that are prescribed for the conference, the user or participant must first authenticate themselves in order to be allowed to participate at all. Next, the client or client node is then connected to the server node or the collaboration tool's backend running on it and added to the conference. The client node then gets access to the audio stream and can "listen" to it, so to speak. The audio stream is then transcribed with the help of an Automatic Speech Recognition (ASR) model located on the client node. Modality tokens can be used here, which are predefined e.g., for keywords etc. or these can also define the user's role in the company and the associated permissions for sensitive topics or areas. With the help of these modality tokens, the transcribed text is pre-marked for the keywords etc. found in order to make it easier for the subsequent analysis to identify particular security-relevant passages. The monitoring and transcription of the audio stream with the aid of the modality tokens takes place in real time. This step can run in parallel and in a loop to other method steps (see Fig.2 "parallel & loop"). According to examples of the invention, however, it is also possible for the server node to monitor the audio stream and transcribe the audio stream with the aid of an ASR model.

In the next step, a transformer model analyzes the audio transcript pre-processed by the ASR model. The transformer model can be available locally in each individual client node, like the ASR model, or it can be implemented centrally on the server node or the collaboration tool backend. The transformer model now analyzes the transcribed text for possible sensitive content in constant repetition, also in real time. If the transformer model finds a potentially security-relevant topic, this is marked with a flag or similarly identified and passed on to the so-called "privacy escalation control process." As already mentioned above, this process can be carried out in parallel by the transformer model or it can also be carried out by another entity, possibly by the server node or even the collaboration tool backend. The privacy escalation control process can first notify the collaboration tool's backend and/or the individual clients and thus the users or participants of the conference that a potentially sensitive topic has been found. However, it is also possible that such information is only communicated to specific user nodes of the conference. This is an alternative approach to not notify every edge about the sensitive topic, but only a moderator of the conference (e.g., the host, organizer, manager, team leader). In this case, the moderator receives the information about the sensitivity of the topics discussed, helping him to guide the conversation to a different topic, alert the other users, or take the responsibility about what is being said. This moderator-based approach enhances the user experience, encouraging adoption, since from the general attendees' point of view, it is just a simple conference. For this scenario it is assumed the moderator of the conversation/conference is authenticated with required methods by company or tenant policy, otherwise this variation is not possible.

During the privacy escalation control process, a comprehensive analysis is carried out in parallel to the analysis by the transformer model, which of course continues. All available and newly received data are constantly aggregated and analyzed. These process steps can run in parallel and in a loop to other steps of the method (see Fig.2 "parallel & loop"). If this comprehensive analysis concludes that there is no security-relevant topic, the flag can be removed from this topic and the system returns to normal operation mode, i.e., the audio stream continues to be transcribed and analyzed.

Otherwise, if the comprehensive analysis concludes that there is indeed a security-relevant issue, immediate measures are taken to close this security gap. This usually takes the form of an action function call triggered by the transformer model, which may contain a plurality of instruction arguments. As already described in connection with FIG. 1, the first instruction argument is always mandatory and requires the re-authentication of all participants in the call/conference.

An optional second instruction argument defines whether the communication channels (which can include audio, text and video) require an escalated profile for this conference/call. This is configured by the requirements of the client profile. If this argument is active and the tenant profile makes this a policy, a new set of secure channels with stricter security policies (e.g., no file sharing), a higher encryption level and in some cases different routing for the channels will be provided. In addition, the conference backend is requested to provide a secure communication channel.

An optional third instruction argument concerns the audio sink (output) name being evaluated by the transformer model. If there is a potential chance that the audio output is a loudspeaker and the topic is sensitive, depending on tenant policies, the user may be required to change their audio device output (e.g., to a headset or headphone) after re-authenticating to be able to rejoin the conference/call. This third instruction argument can also be carried out independently or in addition to the privacy escalation control process. For this purpose, the client or client node transmits information about the audio devices used by the user to the transformer model. This can then instruct the user or client to change the audio output source, for example from a loudspeaker to a headset/headphone.

Once the users have re-authenticated themselves and registered in the new, possibly more secure communications channel, the system returns to normal operations mode.

This proposed solution is not trying to come with new security measures to harden the already strong security requirements implemented in products meant for sensitive fields like defense and government. Instead, the solution according to the invention uses, for example, real-time security requirement elevation within a consultation without dropping interlocutors but requiring them for heightened authentication to continue when sensitive topics or potential fraudulent intentions have been detected. The use of an intelligent on-the-fly based solution like real-time detection of sensitive topics and potentially deceitful content via pre-trained context aware transformer models, which would always ensure that a regular low vetted call or conference session remains in the safe zone by lifting its security layer to a higher tier when required. This security tier, depending on the subjects touched (e.g., finance, purchases, payments, top management topics), would reach authentication and securing techniques such as those seen in the high-profile solutions.

Further, based on call/conference session attributes (e.g., attendees' role, conversation title, and subjects treated) the inventive solution can ask for a certain initial security layer level of the call/ conference session. The initial layer can get bumped up later based on on-the fly events and can get from simple headsets required requests all the way to VPN requirement, MFA and others for the top layers.

The use of the described mechanisms especially the re-authentication also has positive benefits on mitigating deep fake or impersonation attacks when it is applied, as the members of a conference or call inside a collaboration tool have to prove their identity again with a certified authentication mechanism.

Examples of the disclosure can comprise an application or system that would run alongside or be integrated within a virtual collaboration application, complementing it, and ensuring that information is always safeguarded, mitigating risks associated with information leaks, eavesdropping and impersonation. The proposed solution will elevate a conference's authentication and security requirements in real-time based on a mechanism that computes a stream's transcripts and would require elevation if sensitive topics are touched. It aims to seamlessly provide more security in a company's daily collaborations, where human error or avoidance of good practices can lead to sharing sensitive information in insecure communication channels, while also making sure that both the sender and the receiver are the intended persons. Having these security advantages would also offer considerable leverage to a company selling collaboration tools and increased income as a consequence.

However, the invention is not limited to conference sessions but can also be used in other collaboration applications, e.g., chat applications or conference reports. Like in conferences, chat groups can also lack sensitive content in daily conversations. By integrating the invention in this kind of application, the mechanism could tag the sensitivity of the topics discussed (automatically using AI, or manually set by user - since it is not real time) and based on the layer required it could apply a content warning overlay requiring extra security steps to access the tagged discussion.

For conference reports currently there are several solutions that transcript meetings and generate a report with the meeting summary. The present invention could enhance the report generated by providing metrics about the sensitivity of the topics touched, masking sensitive/confidential content, requiring safety measures to access the report, etc.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

## Claims

1. A method for Conference Privacy Screening on Edge with Sensitive Aware Solution, the method comprising the steps of:
- joining via a client or client node, by one or more users, a conference session held on a collaboration tool's backend of a server node;
- capturing, by the client node and/or the server node the audio stream of the conference session;
- transcribing, by an Automatic Speech Recognition, ASR, model the audio stream of the conference session and sending the transcript to a transformer model;
- evaluating, by the transformer model, if a sensitive topic occurs in the transcript;
- marking, by the transformer model, in a case in which a sensitive topic occur, the sensitive topic with a flag; and
- analyzing, by a Privacy Escalation Control Process, the flagged sensitive topic, wherein if the Privacy Escalation Control Process cannot confirm the flagged sensitive topic, the flag is removed and the Privacy Escalation Control Process for that sensitive topic is closed.

2. The method according to claim 1, wherein in case the Privacy Escalation Control Process confirms the occurrence of a sensitive topic, the method further comprises, triggering, by the Privacy Escalation Control Process a re-authentication request to the one or more users, wherein the one or more users are forced to identify themselves again in order to rejoin the conference session.

3. The method according to claim 1, wherein the method further comprises transmitting, by the Privacy Escalation Control Process, to the clients or client nodes or to an organizer or a moderator of the conference session, information about the occurrence of the sensitive topic.

4. The method according to claim 1, wherein the ARS model and/or the transformer model and/or the Privacy Escalation Control Process is implemented at the one or more client or client node and/or at the server node or the collaboration tool's backend.

5. The method according to claim 1, wherein the method further comprises using modality tokens as predefined identifiers on keywords, terms or user role, wherein the transcript is marked in real-time if such a modality token is found, and/ or
further comprising a re-authentication comprising two-factor-authentication, biometric authentication, and/or passkey authentication comprising registered identity authentication.

6. The method according to claim 1, wherein the Privacy Escalation Control Process confirms the flagged sensitive topic by performing a comprehensive analysis that comprises the aggregation of information and the continuous analysis of information in real time and/or wherein performing a comprehensive analysis in parallel to the transcription of the audio stream by the ASR model and/or in parallel to the evaluation of the occurrence of a sensitive topic in the transcript by the transformer model, and/ or
wherein the Privacy Escalation Control Process is part of the transformer model, wherein the Privacy Escalation Control Process is executed in parallel to the evaluation and/or marking of sensitive topics by the transformer model.

7. The method according to claim 1, wherein in case the Privacy Escalation Control Process confirms the occurrence of a sensitive topic, the method further comprises triggering by the Privacy Escalation Control Process a function call action comprising a plurality of instruction arguments.

8. The method according to claim 7, wherein the plurality of instruction arguments comprises:
- requesting a re-authentication from the one or more user; and/or
- requesting a creation of one or more secure communication channel form a conference backend of the collaboration tool's backend; and/or
- gaining access or information to the actively used audio source of the one or more client or client node comprising both input and output audio sources; and/or
- communicating to all the one or more clients or client nodes of the conference session the instruction arguments.

9. The method according to claim 1, wherein in case the Privacy Escalation Control Process confirms the occurrence of a sensitive topic, the method further comprises sending, by the Privacy Escalation control Process a Uniform Resource Locator, URL, to the one or more users of the conference session for re-authentication and rejoining to the conference session.

10. A system for Conference Privacy Screening on Edge with Sensitive Aware Solution, wherein the system is configured to perform the method according to claim 1 and comprises:
- one or more clients or client nodes;
- a server node with a collaboration tool's backend;
- an automatic speech recognition, ASR, model; and
- a transformer model.

11. The system according to claim 10, wherein the automatic speech recognition, ASR, model is configured to receive audio data input from audio output stream channel of the collaboration and to transcribe audio into text with modality tokens as identifiers on keywords or terms in real-time.

12. The system according to claim 10, wherein the transformer model and/or the Privacy Escalation Control Process
- is pre- trained for flagging or confirming sensitive topics based on its modality; and/or
- is configured to use additional text and/or metadata input; and/or
- is configured to gain access to or information about the actively used audio source of the one or more clients or client node comprising both input and output audio sources.

13. The system of claim 12, wherein the transformer model is configured to gain access to or information about the actively used audio source of the one or more clients or client node comprising both input and output audio sources.

14. The system according to claim 10, wherein the transformer model and/or the Privacy Escalation Control Process is configured to use additional custom defined tenant rules and/or user specific sensitive topics, and/ or
wherein the client node captures the audio stream, and/ or
wherein the Privacy Escalation Control Process transmits the information about the occurrence of the sensitive topic to the moderator, and/ or
wherein the ARS is implemented on the client node.

15. A computer-readable medium comprising program code, which when being executed by a processor is adapted to carry out steps of claim 1.
